# EUROPÄISCHE PATENTSCHRIFT

(11) **EP 2 600 130 B1**
(45) Veröffentlichungstag und Bekanntmachung des Hinweises auf die Patenterteilung: **03.02.2016**
(21) Anmeldenummer: 12194846.7
(22) Anmeldetag: 29.11.2012
(51) Int. Cl.: G01L 23/22

(54) **Druckmessvorrichtung und Druckmessverfahren für eine Strömungskraftmaschine**
Pressure measurement device and pressure measuring method for a turbomachinery
Dispositif de mesure de pression et procédé de mesure de pression pour une turbomachine

(30) Priorität: 01.12.2011 DE 102011087599
(43) Veröffentlichungstag der Anmeldung: 05.06.2013
(73) Patentinhaber: Rolls-Royce Deutschland Ltd & Co KG, 15827 Blankenfelde-Mahlow (DE)
(72) Erfinder: Schroer, Frank, 12161 Berlin (DE); Höhne, Peter, 15370 Fredersdorf (DE)
(74) Vertreter: Maikowski & Ninnemann

(56) Entgegenhaltungen:
- US-A1- 2004 123 652
- US-A1- 2004 123 653

## Beschreibung

Die Erfindung betrifft eine Druckmessvorrichtung mit den Merkmalen des Anspruchs 1 und ein Druckmessverfahren mit den Merkmalen des Anspruchs 11.

Aus Gründen des Umweltschutzes ist es das Ziel, Emissionen von Strömungskraftmaschinen, wie z.B. Gasturbinen oder Flugzeugtriebwerken, zu reduzieren. Dabei ist es möglich, Magergemische, d.h. Brennstoffgemische mit einem relativ geringen Brennstoff-zu-Luft-Verhältnis, in einer Brennkammer der Strömungskraftmaschine zu verbrennen.

Dabei kann es zu Betriebszuständen mit hohen Druckspitzen oder anderen Strömungsinstabilitäten kommen. Die Druckschwankungen werden dabei meist durch Schwankungen in der Wärmefreisetzung bei der Verbrennung verursacht, wobei die Druckschwankungen dabei so groß sein können, dass die Brennkammer oder andere Bauelemente der Strömungskraftmaschine beschädigt werden können. Ein Erfassungssystem für derartige Druckschwankungen ist z.B. aus der US 2010/0158670 A1, US 2004/123653 A1 und US 2004/123652 A1 bekannt.

Es besteht die Aufgabe, eine Druckmessvorrichtung und ein Druckmessverfahren bereitzustellen, mit dem die Druckmessung in der Brennkammer besonders effektiv und einfach erfolgen kann.

Die Aufgabe wird durch eine Druckmessvorrichtung mit den Merkmalen des Anspruchs 1 gelöst.

Mit mindestens einem Sensormittel ist ein Ionenstrom an mindestens einer Stelle innerhalb der Brennkammer messbar. Der Ionenstrom, insbesondere dessen zeitabhängige Entwicklung, ist dazu geeignet Druckschwankungen bei der Verbrennung in der Brennkammer zu erfassen. Der Ionenstrom ist direkt in der Brennkammer erfassbar, so dass das entsprechende Messsignal direkt an der Brennkammer generierbar ist.

In mindestens einer vorteilhaften Ausgestaltung weist das mindestens eine Sensormittel ein Elektrodenpaar auf, mit dem der Ionenstrom in der Brennkammer messbar ist. Alternativ oder zusätzlich kann ein Zünder in der Brennkammer das mindestens eine Sensormittel aufweisen. Da ein Zünder ohnehin ein Elektrodenpaar aufweist, kann auf diese Weise eine besonders effiziente Messung des Ionenstroms erreicht werden.

Dabei ist es vorteilhaft, wenn mit einer Ausführungsform dynamische Änderungen des Ionenstroms von einer Steuervorrichtung erfassbar sind. Aus Änderungen des Messsignals, z.B. der Amplitude und / oder der Frequenz, können Aussagen über die Art der Druckschwankungen gezogen werden.

Wenn bei einer Ausführungsform mindestens zwei Sensormittel eingesetzt werden, sind räumliche Unterschiede des Ionenstromes in der Brennkammer erfassbar. Die Verbrennung in der Brennkammer weist bei unterschiedlichen Betriebszuständen unterschiedlich geformte Brennzonen auf, so dass die räumliche Erfassung des Ionenstroms gezieltere Aussagen über die Verbrennung erlaubt.

Dabei ist es besonders vorteilhaft, wenn bei einer Ausführungsform das mit dem mindestens einen Sensormittel erzeugte Messsignal für den Ionenstrom von einer Brennersteuerung zur Regelung der Verbrennung verwendet wird.

Auch ist es vorteilhaft, wenn das Messsignal für den Ionenstrom durch eine Signalverarbeitungsvorrichtung, insbesondere mit einer Fast-Fourier-Analyse, verarbeitbar ist. So können unschädliche Schwankungen von schädlichen Schwankungen unterschieden werden. Dabei ist es besonders vorteilhaft, wenn die Signalverarbeitungsvorrichtung das Messsignal für den Ionenstrom mit einem vorgegebenen Schwellenwert vergleicht und in Abhängigkeit davon die Verbrennung steuert.

Die Druckmessvorrichtung ist besonders vorteilhaft bei Magerverbrennungen einsetzbar, insbesondere, wenn die Verbrennung in der Brennkammer mit einem Äquivalenzverhältnis im Bereiche 0,5 < ϕ < 1 ausgebildet ist.

Auch ist es vorteilhaft, wenn eine Ausführungsform der Druckmessvorrichtung mit einer Brennkammer eines Flugzeugtriebwerks gekoppelt ist.

Die Aufgabe wird auch durch ein Druckmessverfahren mit den Merkmalen des Anspruchs 11 gelöst. Vorteilhafte Ausführungsformen des Druckmessverfahrens sind in den Unteransprüchen angegeben.

Im Zusammenhang mit den in den Figuren dargestellten Ausführungsbeispielen wird die Erfindung erläutert. Dabei zeigt
Fig. 1 den grundsätzlichen Aufbau einer Brennkammer einer Strömungskraftmaschine mit einer Ausführungsform einer Druckmessvorrichtung;
Fig. 2 den grundsätzlichen Aufbau einer Brennkammer einer Strömungskraftmaschine mit einer weiteren Ausführungsform einer Druckmessvorrichtung;
Fig. 3 eine schematische Darstellung einer ersten Ausführungsform der Druckmessvorrichtung mit einer Elektrode, die einzeln gegenüber Masse isoliert ist;
Fig. 4 eine schematische Darstellung einer zweiten Ausführungsform der Druckmessvorrichtung mit zwei Elektroden, die beide gegenüber Masse isoliert sind;
Fig. 5 eine schematische Darstellung einer dritten Ausführungsform der Druckmessvorrichtung mit einer Elektrode, die beide gegenüber Masse isoliert sind;
Fig. 6 eine perspektivische Darstellung eines Flugzeugtriebwerkes.

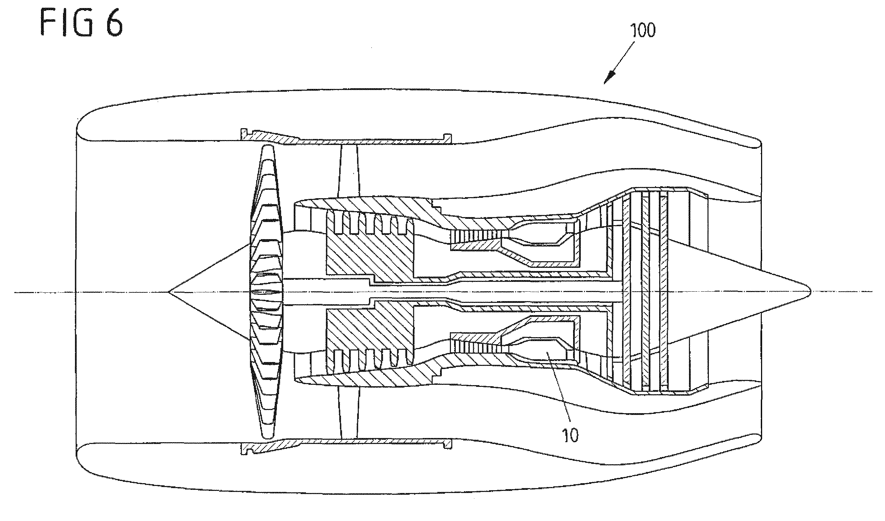

Bevor auf Ausführungsformen der Druckmessvorrichtung eingegangen wird, wird zunächst auf die chemischen Verhältnisse bei der Verbrennung eingegangen. Dabei wird beispielhaft auf eine Brennkammer 10 in einem Flugzeugtriebwerk 100 (siehe Fig. 6) Bezug genommen. Grundsätzlich lässt sich die Druckmessvorrichtung aber auch in anderen Strömungsarbeitsmaschinen, wie z.B. Gasturbinen, einsetzen.

In einer Brennkammer 10 wird ein Gemisch aus Luft und Brennstoff verbrannt und dadurch die im Brennstoff enthaltene chemische Energie in Wärme umgewandelt.

Als Brennstoff wird z.B. bei einem Flugzeugtriebwerk 100 Kerosin verwendet und durch Oxidation in Kohlendioxid CO₂ und Wasserdampf H₂O umgewandelt. Für eine stöchiometrische, d.h. vollständige Verbrennung, werden für ein Mol Kerosin C₁₂H₂₄ 18 Mol Sauerstoff benötigt.

Das Brennstoff-Luft-Verhältnis für eine stöchiometrische Verbrennung ist β_{stöch} = 0,068067. Zur vollständigen Verbrennung werden 1g Brennstoff und 3,42 g Sauerstoff (14.7g Luft) benötigt. Ist in einer Brennzone 12 der Brennkammer β > β_{stöch}, liegt ein Überschuss an Brennstoff und somit ein fettes Gemisch vor. Ist in der Brennzone β < β_{stöch} in der Brennzone 12 der Brennkammer 10, liegt ein mageres Gemisch vor.

Bei über-stöchiometrischer Verbrennung bleiben Reste, z.B. als Kohlenmonoxid oder in Form von unverbrannten Kohlenwasserstoffen, übrig, die als Schadstoffe die Brennkammer 1 verlassen. Wenn man das Brennstoff-Luftverhältnis β_{BK} in der Brennkammer 1 ins Verhältnis zum stöchiometrischen Verhältnis setzt, so kann ein Äquivalenzverhältnis ϕ = β_{BK} / β_{stöch} definiert werden, d.h. bei ϕ < 1 liegt ein mageres Gemisch vor.

Das Äquivalenzverhältnis ϕ kann dabei nicht beliebig klein sein, da ab einem bestimmten Verhältnis - abhängig von Temperatur und Druck - das Brennstoffgemisch nicht mehr zündfähig ist.

Bei einem Magergemisch können deutliche Druckschwankungen auf Grund von Inhomogenitäten bei der Wärmefreisetzung auftreten.

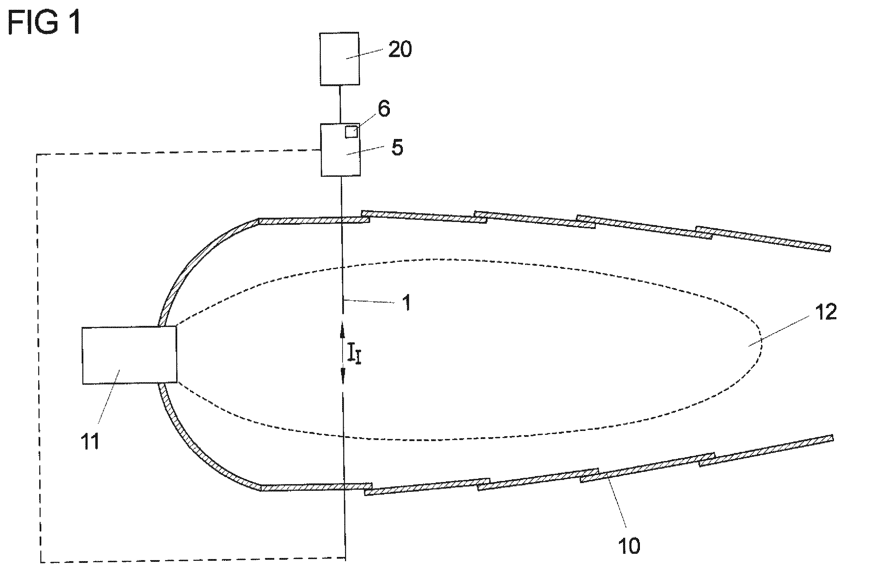

In Fig. 1 ist schematisch eine Druckmessvorrichtung dargestellt, mit der die Druckschwankungen in der Brennkammer 10 mittels einer Ionenstrommessung effizient erfassbar sind. Von einem Brenner 11 erstreckt sich im Betrieb eine Brennzone 12 in die Brennkammer 10.

In einer Brennkammer 10 treten während der Verbrennung Temperaturen von bis zu 2400 K auf. Bei diesen hohen Temperaturen liegt das Brennstoff-Luft-Gemisch teilweise ionisiert, d.h. elektrisch leitfähig vor.

In der Brennkammer 10 ist ein Sensormittel 1 angeordnet, das ein Elektrodenpaar 1 aufweist.

Ein Elektrodenpaar 1 ist gegenüber der Brennkammer 10 elektrisch isoliert und mit einer Steuervorrichtung 5 verbunden, die eine Gleichspannung an das Elektrodenpaar 1 anlegt. An dem mit Gleichspannung versorgten Elektrodenpaar 1 wird der Ionenstrom Iₗ im Inneren der Brennzone 12 gemessen. Die Größe des Ionenstroms Iₗ hängt dabei vom Ionisationsgrad der Verbrennungsgase zwischen dem Elektrodenpaar 1 ab. Da das Elektrodenpaar 1 im Inneren der Brennkammer 10 angeordnet ist, kann der Verbrennungsprozess direkt überwacht werden. In der Ausführungsform der Fig. 1 ist das Elektrodenpaar 1 senkrecht zur Flammenausbreitungsrichtung (d.h. in Fig. 1 vom Brenner 11 nach rechts) angeordnet. Grundsätzlich ist es auch möglich, zusätzliche oder alternative Elektrodenpaare entlang der Flammenausbreitungsrichtung anzuordnen.

Wenn Sensormittel 1 an verschiedenen Stellen in der Brennkammer 10 angeordnet sind, kann eine dynamische räumliche Auflösung der Druckschwankungen erfolgen. Die Steuervorrichtung 5 kann dann Signale einzelnen Bereichen der Brennkammer 10 zuordnen, so dass die Brennersteuerung 20 gezielte Maßnahmen zur Unterdrückung unerwünschter Druckschwankungen vornehmen kann.

Auch wenn es möglich ist, stationäre Werte des Ionenstroms Iₗ zu messen, so ist es vorteilhaft, den dynamischen Verlauf des Ionenstroms Iₗ (t) zu messen. Das dynamische Signal des Ionenstroms Iₗ (t) wird der Steuervorrichtung 5 zugeführt, die eine Signalverarbeitungsvorrichtung 6 aufweist, mit der ein Signal für das Einsetzen von unerwünschten Druckschwankungen generierbar ist. Da die in Frage kommenden Druckschwankungen (ggf. räumlich aufgelöst) bestimmte Frequenzbereiche aufweisen, ist es sinnvoll, wenn die Signalverarbeitungsvorrichtung 6 ein Mittel zur Durchführung einer Fast-Fourier-Transformation (FFT) und geeignete Filtervorrichtungen aufweist. Die Signalverarbeitungsvorrichtung 6 verfügt ferner über ein Mittel, Druckschwankungen erst ab einem bestimmten Grenzwert als relevant einzustufen, um dann z.B. die Verbrennung anders zu steuern.

Die Steuervorrichtung 5 ist mit einer Brennersteuerung 20 verbunden, die in Abhängigkeit von ermittelten absoluten Werten und / oder dem dynamischen Verlauf des Ionenstroms Iₗ (t) Stellsignale an den Brenner 11 liefert.

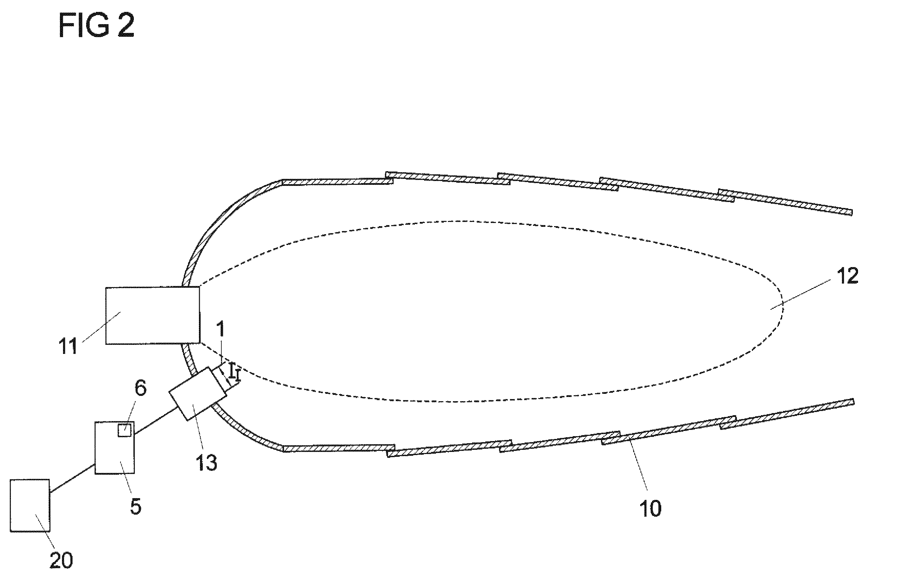

In Fig. 2 ist eine Variante der in Fig. 1 beschriebenen Ausführungsform dargestellt, so dass grundsätzlich auf die obige Beschreibung Bezug genommen werden kann.

Der Unterschied zur ersten Ausführungsform (Fig. 1) liegt darin, dass ein ohnehin in einem Flugzeugtriebwerk 100 vorhandener Zünder 13 (Igniter) das Sensormittel 1 zur Messung des Ionenstroms Iₗ aufweist.

Typischerweise werden als Zünder 13 Zündkerzen mit einer inneren Elektrode aus einem Eisen-Nickel Material und einer äußeren, geerdeten Elektrode aus Stahl verwendet. Die beiden Elektroden, die zusammen ein Elektrodenpaar 1 bilden, sind durch einen keramischen Isolator voneinander getrennt. Das Elektrodenpaar 1 des Zünders 13 dient in bestimmten Betriebsphasen (z.B. beim Start oder bei Wasser im Flugzeugtriebwerk 100) der Zündung einer Flamme.

Somit kann ein ohnehin vorhandenes Bauelement, nämlich der Zünder 13, als Druckmessmittel verwendet werden. Da bei einem Flugzeugtriebwerk 100 der Zünder 13 nur in bestimmten Betriebsbereichen zur Zündung verwendet werden muss, steht es während der meisten Zeit als Messinstrument zur Verfügung. Die Stromversorgung für das Zünden der Flamme kann somit als Stromquelle für das Elektrodenpaar 1 dienen, wenn eine Messung des Ionenstromes (Iₗ) durchgeführt wird.

Der Zünder 13 und dessen Elektrodenpaar 1 ragt meist nicht direkt in die Brennzone 12 hinein, so dass der Ionenstrom außerhalb der Brennzone 12 gemessen wird. Dies erlaubt aber immer noch Rückschlüsse auf Druckschwankungen in der Brennkammer 10.

Es ist auch möglich die Ausführungsformen gemäß Fig. 1 und Fig. 2 miteinander zu kombinieren.

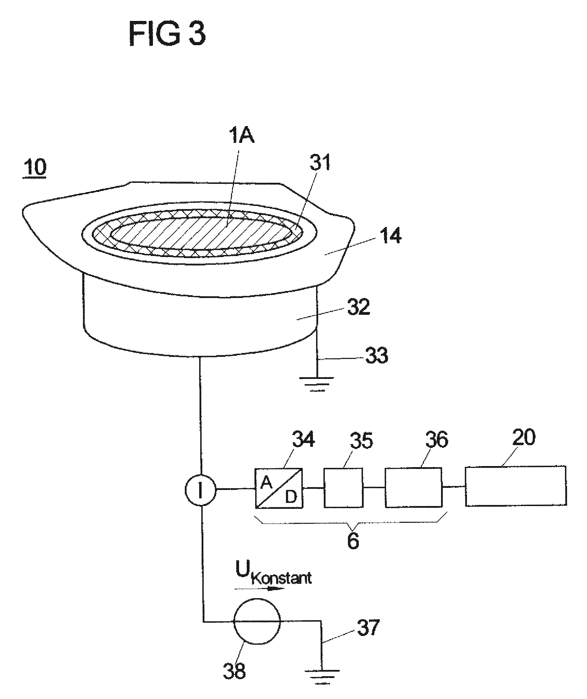

In den Fig. 3 bis 5 sind weitere Ausführungsbeispiele dargestellt. Dabei unterscheiden diese sich im Wesentlichen dadurch, ob beide Elektroden des Sensormittels 1 gegenüber dem Gehäuse der Brennkammer 10 isoliert sind, oder nur eine Elektrode des Sensormittels 1. Die Elektroden sollten dabei aus der Brennkammerwand 14 hinaus in die Brennkammer hineinragen. Somit wird sichergestellt, dass die Elektroden mit ionisiertem Gas in Kontakt kommen.

In Fig. 3 ist eine erste Ausführungsform dargestellt, bei der eine Elektrode 1A aus Wolfram als ein Teil eines Sensormittels 1 für die Ionenstrommessung vorgesehen ist, das durch eine Brennkammerwand 14 hindurch in die Brennkammer 10 hineinragt. Die Brennkammer 10 ist hier oberhalb der Elektrode 1 angeordnet. Die stabförmige Elektrode 1 A ist von einem Isolator 31 umgeben, so dass die Elektrode 1 A gegenüber einem Gehäuse 32 elektrisch isoliert ist. Das Gehäuse 32 weist einen Masseanschluss auf. Das Gehäuse 32 ist in die Brennkammerwand 14 integriert.

Die Elektrode 1 A ist somit einzeln gegen Masse isoliert.

Eine Signalverarbeitungsvorrichtung 6, deren Funktion im Folgenden beschrieben wird, misst den Stromfluss zur Elektrode 1A, die mit einer Konstantspannungsquelle 38 versorgt wird. Die Konstantspannungsquelle weist einen Masseanschluss 37 auf.

Die Signalverarbeitungsvorrichtung 6 weist einen A/D Wandler 34 auf, der das analog gemessene Stromsignal in ein digitales Signal umwandelt. Das digitale Signal wird dann in einem Fast-Fourier-Transformations Analysemittel 35 einer FFT unterzogen, wobei das ausgewertete FFT-Signal in einer Auswertungseinheit 36 aufbereitet wird. Das Ergebnis wird dann der Brennersteuerung 20 zur Verfügung gestellt, die in Abhängigkeit von der aufbereiteten Strommessung Brennerparameter einstellen kann.

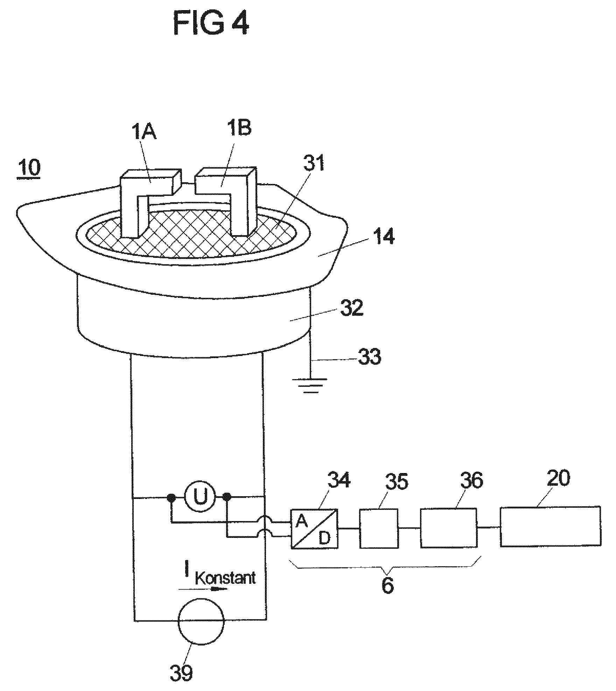

In Fig. 4 ist eine zweite Ausführungsform dargestellt. Anders als bei der ersten Ausführungsform dient hier ein Elektrodenpaar 1A, 1B aus Wolfram der Ionenstrommessung. Die beiden Elektroden 1 A, 1 B sind in einem Isolator 31 eingebettet, der die Elektroden gegenüber dem Gehäuse 32 elektrisch isoliert. Das Gehäuse 32 ist wieder in die Brennkammerwand 14 integriert. Das Gehäuse 32 weist einen Masseanschluss auf. Beide Elektroden 1A, 1B sind mit einer Konstantstromquelle 39 verbunden.

Die Signalverarbeitungsvorrichtung 6 wertet bei dieser Ausführungsform nicht den Stromfluss, sondern die Spannungen zwischen den beiden Elektroden 1A, 1B aus. Die Auswertung an sich erfolgt wie in der ersten Ausführungsform, so dass auf die dortige Beschreibung Bezug genommen werden kann.

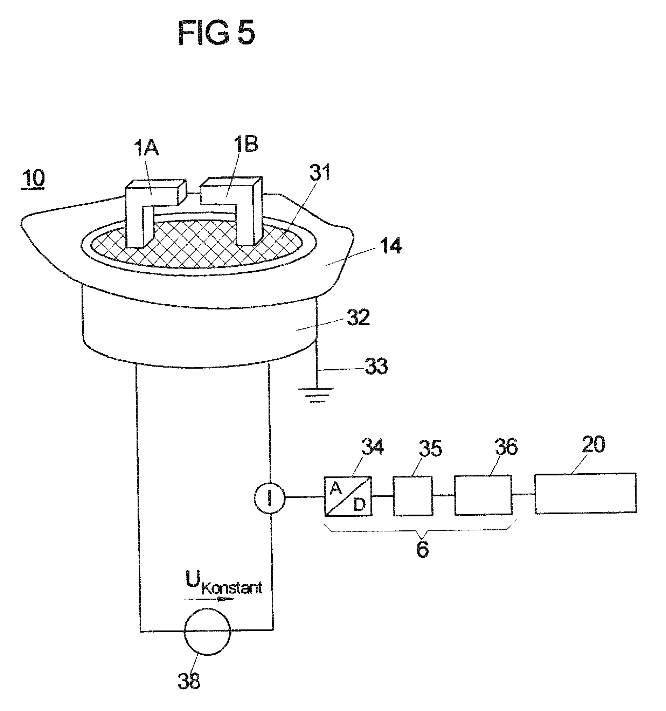

In Fig. 5 ist eine Kombination der ersten und zweiten Ausführungsform dargestellt. Wie in der zweiten Ausführungsform werden zwei Elektroden 1A, 1B verwendet, die aber mit einer Konstantspannungsquelle 38 verbunden sind. Die Integration der Elektroden 1A, 1B in die Brennkammerwand 14 entspricht der zweiten Ausführungsform.

Die Auswertung des Messsignals durch die Signalverarbeitungsvorrichtung 6 hingegen, folgt der ersten Ausführungsform, da hier wieder das Stromsignal in der Elektrodenleitung ausgewertet wird. Die Funktion der Signalverarbeitungsvorrichtung 6 wurde bereits im Zusammenhang mit der ersten Ausführungsform beschrieben.

### Bezugszeichenliste

- 1: Sensormittel für Ionenstrom, Elektrodenpaar
- 1A: eine erste Elektrode eines Sensormittels
- 1B: eine zweite Elektrode eines Sensormittels

- 5: Steuerungsvorrichtung
- 6: Signalverarbeitungsvorrichtung

- 10: Brennkammer
- 11: Brenner
- 12: Brennzone
- 13: Zünder (Igniter)
- 14: Brennkammerwand

- 20: Brennersteuerung

- 31: Isolator
- 32: Gehäuse einer Elektrode
- 33: Masseanschluss des Gehäuses
- 34: A/D Wandler
- 35: FFT Analysemittel
- 36: Auswertungseinheit
- 37: Masseanschluss
- 38: Konstantspannungsquelle
- 39: Konstantstromquelle

- 100: Flugzeugtriebwerk

## Patentansprüche

1. Druckmessvorrichtung zur Messung des Druckes in einer Brennkammer einer Strömungsarbeitsmaschine,
**gekennzeichnet durch**
mindestens ein Sensormittel (1) zur Messung der Ionenspannung (U) an mindestens einer Stelle innerhalb der Brennkammer (10), wobei mindestens eine Elektrode (1A, 1 B) des Sensormittels (1) gegen Masse isoliert ist und in einer Brennkammerwand (14) angeordnet ist, wobei die mindestens eine Elektrode (1A, 1B) mit einer Konstantstromquelle (39) gekoppelt ist.

2. Druckmessvorrichtung nach Anspruch 1, **dadurch gekennzeichnet, dass** das mindestens eine Sensormittel (1) ein Elektrodenpaar (1A, 1B) aufweist, mit der die Ionenspannung (U) in der Brennkammer (10) messbar ist.

3. Druckmessvorrichtung nach Anspruch 1 oder 2, **dadurch gekennzeichnet, dass** ein Zünder (13) in der Brennkammer das mindestens eine Sensormittel (1) aufweist.

4. Druckmessvorrichtung nach mindestens einem der vorhergehenden Ansprüche, **dadurch gekennzeichnet, dass** mit dem mindestens einen Sensormittel (1) dynamische Änderungen der Ionenspannung (U) von einer Steuervorrichtung (5) erfassbar sind.

5. Druckmessvorrichtung nach mindestens einem der vorhergehenden Ansprüche, **dadurch gekennzeichnet, dass** mit mindestens zwei Sensormitteln (1) räumliche Unterschiede der Ionenspannung (U) in der Brennkammer (10) erfassbar sind.

6. Druckmessvorrichtung nach mindestens einem der vorhergehenden Ansprüche, **dadurch gekennzeichnet, dass** mit dem mindestens einen Sensormittel (1) ein Messsignal für die Ionenspannung (U) erzeugbar ist, das von einer Brennersteuerung (20) zur Regelung der Verbrennung verwendbar ist.

7. Druckmessvorrichtung nach mindestens einem der vorhergehenden Ansprüche, **dadurch gekennzeichnet, dass** das Messsignal für die Ionenspannung (Uₗ) durch eine Signalverarbeitungsvorrichtung (6), insbesondere mit einer Fast-Fourier-Analyse, verarbeitbar ist, wobei insbesondere mittels der Signalverarbeitungsvorrichtung (6) das Messsignal für die Ionenspannung (Uₗ) mit einem vorgegebenen Schwellenwert vergleichbar ist und in Abhängigkeit davon die Verbrennung steuerbar ist.

8. Druckmessvorrichtung nach mindestens einem der vorhergehenden Ansprüche, **dadurch gekennzeichnet, dass** die Verbrennung in der Brennkammer (10) als Magerverbrennung mit einem Äquivalentverhältnis im Bereich 0,5 < ϕ < 1 ausgebildet ist.

9. Druckmessvorrichtung nach mindestens einem der vorhergehenden Ansprüche, **dadurch gekennzeichnet, dass** diese mit einer Brennkammer (10) eines Flugzeugtriebwerks gekoppelt ist.

10. Druckmessvorrichtung nach mindestens einem der vorhergehenden Ansprüche, **dadurch gekennzeichnet, dass** die Signalverarbeitungsvorrichtung (6) Änderungen der Spannung zwischen zwei Elektroden (1A, 1 B) erfasst.

11. Druckmessverfahren zur Messung des Druckes in einer Brennkammer einer Strömungsarbeitsmaschine,
**gekennzeichnet dadurch,**
**dass** mit mindestens einem Sensormittel (1) eine Ionenspannung (U) an mindestens einer Stelle innerhalb der Brennkammer (10) gemessen wird, wobei mindestens eine Elektrode (1A, 1B) des Sensormittels (1) gegen Masse isoliert ist und in einer Brennkammerwand (14) angeordnet ist, wobei die mindestens eine Elektrode (1A, 1B) mit einer Konstantstromquelle (39) gekoppelt ist.

12. Druckmessverfahren nach Anspruch 11, **dadurch gekennzeichnet, dass** zur Erfassung räumlicher Unterschiede der Ionenspannung (U) Messungen in der Brennkammer (10) mit mindestens zwei Sensormitteln (1) durchgeführt werden.

13. Druckmessverfahren nach Anspruch 11 oder 12, **dadurch gekennzeichnet, dass** mit dem mindestens einen Sensormittel (1) ein Messsignal für die Ionenspannung (U) erzeugt wird, das von einer Brennersteuerung (20) zur Regelung der Verbrennung verwendet wird.

14. Druckmessverfahren nach mindestens einem der Ansprüche 11 bis 13, **dadurch gekennzeichnet, dass** das Messsignal für die Ionenspannung (U) durch eine Signalverarbeitungsvorrichtung (6), insbesondere mit einer Fast-Fourier-Analyse, verarbeitet wird, wobei insbesondere die Signalverarbeitungsvorrichtung (6) das Messsignal für die Ionenspannung (Iₗ) mit einem vorgegebenen Schwellenwert vergleicht und in Abhängigkeit davon die Verbrennung gesteuert wird.

## Claims

1. Pressure-measuring device for measuring the pressure in a combustion chamber of a turbomachine,
**characterized by**
at least one sensor means (1) for measuring the ion voltage (U), said sensor means (1) being provided at at least one point inside the combustion chamber (10), wherein at least one electrode (1A, 1B) of the sensor means (1) is insulated against ground and arranged in a combustion chamber wall (14), and wherein the at least one electrode (1A, 1 B) is coupled to a constant current source (39).

2. Pressure-measuring device in accordance with Claim 1, **characterized in that** the at least one sensor means (1) has an electrode pair (1A, 1B) using which the ion voltage (U) in the combustion chamber (10) can be measured.

3. Pressure-measuring device in accordance with Claim 1 or 2, **characterized in that** an igniter (13) in the combustion chamber has the at least one sensor means (1).

4. Pressure-measuring device in accordance with at least one of the preceding Claims, **characterized in that** using the at least one sensor means (1) dynamic changes of the ion voltage (U) can be detected by a control device (5).

5. Pressure-measuring device in accordance with at least one of the preceding Claims, **characterized in that** t using at least two sensor means (1) spatial differences of the ion voltage (U) in the combustion chamber (10) can be detected.

6. Pressure-measuring device in accordance with at least one of the preceding Claims, **characterized in that** t using the at least one sensor means (1) a measuring signal for the ion voltage (U) can be generated which can be used by a burner control (20) for regulating combustion.

7. Pressure-measuring device in accordance with at least one of the preceding Claims, **characterized in that** the measuring signal for the ion voltage (Uᵢ) can be processed by a signal-processing device (6), in particular with a fast Fourier analysis, where in particular by means of the signal-processing device (6) the measuring signal for the ion voltage (Uᵢ) can be compared with a predefined threshold value and combustion controlled as a function thereof.

8. Pressure-measuring device in accordance with at least one of the preceding Claims, **characterized in that** the combustion in the combustion chamber (10) is performed as a lean combustion having an equivalence ratio in the range of 0.5 < ϕ < 1.

9. Pressure-measuring device in accordance with at least one of the preceding Claims, **characterized in that** t this device is coupled to a combustion chamber (10) of an aircraft engine.

10. Pressure-measuring device in accordance with at least one of the preceding Claims, **characterized in that** t the signal-processing device (6) detects voltage changes between two electrodes (1A, 1 B).

11. Pressure-measuring method for measuring the pressure in a combustion chamber of a turbomachine,
**characterized in that**
using at least one sensor means (1) an ion voltage (U) is measured at at least one point inside the combustion chamber (10), wherein at least one electrode (1A, 1B) of the sensor means (1) is insulated against ground and arranged in a combustion chamber wall (14), and wherein the at least one electrode (1A, 1B) is coupled to a constant current source (39).

12. Pressure-measuring method in accordance with Claim 11, **characterized in that** for detecting spatial differences of the ion voltage (U) measurements using at least two sensor means (1) are performed in the combustion chamber (10).

13. Pressure-measuring method in accordance with Claim 11 or 12, **characterized in that** using the at least one sensor means (1) a measuring signal for the ion voltage (U) is generated, which is used by a burner control (20) for regulating combustion.

14. Pressure-measuring method in accordance with at least one of the Claims 11 to 13, **characterized in that** t the measuring signal for the ion voltage (U) is processed by a signal-processing device (6), in particular with a fast Fourier analysis, where in particular the signal-processing device (6) compares the measuring signal for the ion voltage (Uᵢ) with a predefined threshold value and combustion is controlled as a function thereof.

## Revendications

1. Dispositif de mesure de pression pour mesurer la pression dans une chambre de combustion d'une turbomachine,
**caractérisé par**
au moins un moyen capteur (1) pour mesurer la tension ionique (U) à au moins un emplacement dans la chambre de combustion (10), sachant qu'au moins une électrode (1A, 1B) du moyen capteur (1) est isolée de la masse et disposée dans une paroi (14) de la chambre de combustion, l'au moins une électrode (1A, 1B) étant couplée à une source de courant constant (39).

2. Dispositif de mesure de pression selon la revendication n° 1, **caractérisé en ce que** l'au moins un moyen capteur (1) présente une paire d'électrodes (1A, 1B) permettant de mesurer la tension ionique (U) dans la chambre de combustion (10).

3. Dispositif de mesure de pression selon la revendication n° 1 ou n° 2, **caractérisé en ce qu'**un allumeur (13) dans la chambre de combustion présente l'au moins un moyen capteur (1).

4. Dispositif de mesure de pression selon au moins une des revendications précédentes, **caractérisé en ce que** moyennant l'au moins un moyen capteur (1) des variations dynamiques de la tension ionique (U) peuvent être détectées par un dispositif de commande (5).

5. Dispositif de mesure de pression selon au moins une des revendications précédentes, **caractérisé en ce que** moyennant au moins deux moyens capteur (1) des différences spatiales de la tension ionique (U) peuvent être détectées dans la chambre de combustion (10).

6. Dispositif de mesure de pression selon au moins une des revendications précédentes, **caractérisé en ce que** l'au moins un moyen capteur (1) permet de générér un signal de mesure pour la tension ionique (U) qui peut être utilisé par une commande de brûleur (20) pour régler la combustion.

7. Dispositif de mesure de pression selon au moins une des revendications précédentes, **caractérisé en ce que** le signal de mesure pour la tension ionique (Uᵢ) peut être traité par un dispositif de traitement des signaux (6), en particulier par une analyse de Fourier rapide, sachant qu'en particulier moyennant le dispositif de traitement des signaux (6) le signal de mesure pour la tension ionique (Uᵢ) peut être comparé à un seuil prédéfini et que la combustion peut être commandée en fonction de cette comparaison.

8. Dispositif de mesure de pression selon au moins une des revendications précédentes, **caractérisé en ce que** la combustion dans la chambre de combustion (10) prend la forme d'une combustion pauvre avec un rapport d'équivalence de l'ordre de 0,5 < ϕ < 1.

9. Dispositif de mesure de pression selon au moins une des revendications précédentes, **caractérisé en ce qu'**il est couplé à une chambre de combustion (10) d'un moteur d'avion.

10. Dispositif de mesure de pression selon au moins une des revendications précédentes, **caractérisé en ce que** le dispositif de traitement des signaux (6) détecte les variations de la tension entre deux électrodes (1A, 1B).

11. Procédé de mesure de pression pour mesurer la pression dans une chambre de combustion d'une turbomachine,
**caractérisé en ce que**
moyennant au moins un moyen capteur (1) une tension ionique (U) est mesurée à au moins un emplacement dans la chambre de combustion (10), sachant qu'au moins une électrode (1A, 1B) du moyen capteur (1) est isolée de la masse et disposée dans une paroi (14) de la chambre de combustion, l'au moins une électrode (1A, 1B) étant couplée à une source de courant constant (39).

12. Procédé de mesure de pression selon la revendication n° 11, **caractérisé en ce que** des mesures sont effectuées dans la chambre de combustion (10) avec au moins deux moyens capteur (1) pour détecter les différences spatiales de la tension ionique (U).

13. Procédé de mesure de pression selon la revendication n° 11 ou n° 12, **caractérisé en ce que** l'au moins un moyen capteur (1) genère un signal de mesure pour la tension ionique (U) qui est utilisé par une commande de brûleur (20) pour régler la combustion.

14. Procédé de mesure de pression selon au moins une des revendications n° 11 à n° 13, **caractérisé en ce que** le signal de mesure pour la tension ionique (U) est traité par un dispositif de traitement des signaux (6), en particulier par une analyse de Fourier rapide, sachant qu'en particulier moyennant le dispositif de traitement des signaux (6) le signal de mesure pour la tension ionique (Uᵢ) est comparé à un seuil prédéfini et que la combustion est commandée en fonction de cette comparaison.
